(19) Europäisches Patentamt
European Patent Office
Office européen des brevets

(11) **EP 3 440 437 B1**

(12) **EUROPÄISCHE PATENTSCHRIFT**

(45) Veröffentlichungstag und Bekanntmachung des Hinweises auf die Patenterteilung:
**16.02.2022  Patentblatt 2022/07**

(21) Anmeldenummer: **17713001.0**

(22) Anmeldetag: **23.03.2017**

(51) Internationale Patentklassifikation (IPC):
*G01F 13/00* (2006.01)        *G01F 23/288* (2006.01)

(52) Gemeinsame Patentklassifikation (CPC):
**G01F 13/005; G01F 13/006;** G01F 23/288

(86) Internationale Anmeldenummer:
**PCT/EP2017/056922**

(87) Internationale Veröffentlichungsnummer:
**WO 2017/174367 (12.10.2017 Gazette 2017/41)**

(54) **VORRICHTUNG ZUR ABFÜLLUNG EINES PRODUKTS**

DEVICE FOR FILLING A PRODUCT

DISPOSITIF POUR TRANSVASER UN PRODUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2016  DE 102016205672**

(43) Veröffentlichungstag der Anmeldung:
**13.02.2019  Patentblatt 2019/07**

(73) Patentinhaber: **Syntegon Technology GmbH
71332 Waiblingen (DE)**

(72) Erfinder:
• **KRUPPA, Felix
70736 Fellbach (DE)**
• **WILKE, Bernd
71397 Leutenbach (DE)**
• **OBERDORFER, Berend
72793 Pfullingen (DE)**
• **HAMMER, Christoph
71672 Marbach (DE)**
• **HAAK, Juergen
86938 Schondorf (DE)**

(74) Vertreter: **DREISS Patentanwälte PartG mbB
Postfach 10 37 62
70032 Stuttgart (DE)**

(56) Entgegenhaltungen:
DE-A1- 19 743 057        DE-A1-102006 013 663
DE-A1-102007 053 860      DE-A1-102011 077 782
US-A1- 2005 173 016

EP 3 440 437 B1

**Beschreibung**

Die vorliegende Erfindung betrifft eine Vorrichtung zur Abfüllung eines Produkts.

Vertikale Schlauchbeutelmaschinen sind aus dem Stand der Technik in unterschiedlichen Ausgestaltungen bekannt. Hierbei werden Produktelemente eines abzufüllenden Produkts mittels einer Sensoreinrichtung erfasst, um die in den Schlauchbeutel abgefüllte Produktmenge zu ermitteln. Eine derartige Schlauchbeutelmaschine ist z. B. aus der DE 10 2006 013 663 A1 bekannt. Der Sensor detektiert nur Objekte außerhalb des Füllrohrs. Der Abstand zwischen Sender und Empfänger des Mengenmesssystems ist zwar konstant, jedoch kann das Schlauchende, in dem sich die zu detektierende Menge befindet, in der Positionierung um einige Millimeter oder Zentimeter schwanken. Aufgrund dieser Schwankungen kann es zu erheblichen Fehldetektionen kommen. Zudem werden Produktabgabeeinrichtungen gesteuert. Ergibt sich eine Abweichung zwischen der Sollmenge und der aktuell gemessenen Menge, dann wird die Produktabgabeeinrichtung nachgesteuert und damit die abzugebende Menge beim nächsten abzufüllenden Beutel verändert.

Die EP 2791010 B1 betrifft eine Schlauchbeutelmaschine zur Abfüllung eines Produkts, umfassend ein vertikales Füllrohr, eine Quersiegeleinheit, eine Steuereinheit zur Steuerung der Schlauchbeutelmaschine, und eine Sensoreinrichtung zur Erfassung des Produkts im Füllrohr, welche ausgelegt ist, das durch das Füllrohr fallende Produkt zu erfassen, wobei die Sensoreinrichtung einen Sensor zum Emittieren von elektromagnetischen Wellen umfasst, der mit der Steuereinheit verbunden ist, wobei die vom Sensor emittierten elektromagnetischen Wellen in einem Erfassungsraum verbleiben, welcher auf einen Bereich am Füllrohr begrenzt ist.

Aus der DE 10307672 A1 ist ein Verfahren zum Abfüllen eines flüssigen oder schüttbaren Mediums in ein Behältnis bekannt. Die Abfüllvorrichtung weist einen Vorratsbehälter sowie eine Durchflussmesseinrichtung und ein Ventil auf. Eine Steuerung des Ventils erfolgt in Abhängigkeit von der mittels der Durchflussmesseinrichtung erfassten abgefüllten Menge. Eine integrierte Durchflussmenge stellt zu einem jeden Zeitpunkt die Menge dar, die aus dem Vorratsbehälter durch die Durchflussmesseinrichtung und das Ventil hindurch in das Behältnis abgefüllt worden ist. Bei Erreichen eines Endwerts wie von der Durchflussmesseinrichtung ermittelt wird das Ventil geschlossen.

Aus der DE 102011077782 A1 sind eine Vorrichtung und Verfahren zum Dosieren eines pulverförmigen Produkts bekannt, gemäß dem Oberbegriff des Anspruchs 1. Die Vorrichtung umfasst zwei Sensoren, die mit einer Steuereinheit verbunden sind, welche den Antrieb steuert. Hierbei wird die Dichte mehrfach während eines Abfüllvorgangs bestimmt, um eine möglichst exakte Dosierung sicherzustellen.

Aus der DE 197 43 057 A1 sind eine weitere Vorrichtung und Verfahren zum Dosieren eines pulverförmigen Produkts bekannt.

Offenbarung der Erfindung

Die erfindungsgemäße Vorrichtung mit den Merkmalen des Anspruchs 1 weist demgegenüber den Vorteil auf, dass in der Vorrichtung zum Abfüllen selbst die Dichte und/oder die Masse und damit die Menge des abzufüllenden Produkts bestimmt werden können. Mit dieser Information kann die Produktabgabeeinrichtung online, also während des Dosierprozesses, geregelt bzw. gesteuert werden. Dies erhöht die Dosiergenauigkeit. Damit wird ein Ausschuss von nicht korrekt gefüllten Beuteln bzw. Verpackungen, bei denen die abgefüllte Menge signifikant von der Sollmenge abweicht, vermieden. Dies wird erfindungsgemäß durch eine bestimmte Anordnung der Sensoreinrichtung erreicht, so dass sie die charakteristischen Eigenschaften des in der Dosiereinrichtung befindlichen Produkts ermittelt sowie durch das Vorsehen eines Reglers, der in Abhängigkeit von dem Ausgangssignal der Sensoreinrichtung die Dosiereinrichtung ansteuert. Über die Kenntnis der seit Dosierbeginn in jedem Zeitschritt berechneten oder ermittelten dosierten Menge und der Sollmenge wird in jedem Zeitschritt beispielsweise die Drehzahl, die Umdrehungen und/oder die Dosierzeit der aktuellen Dosierung über den Regler angepasst. Gerade bei Änderungen der Dichte des Produkts können diese über den Regler quasi noch während des laufenden Dosiervorgangs berücksichtigt werden, sodass die Gefahr von Fehldosierungen vermieden werden kann.

Erfindungsgemäß ist dem Regler eine Differenz aus einem Sollwertverlauf und einem Ist-Verlauf, der abhängt von dem Ausgangssignal der Sensoreinheit, zugeführt. Damit kann eine kontinuierliche Anpassung während des laufenden Dosiervorgangs erfolgen. Erfindungsgemäß wird als Sollwertverlauf und/oder Verlauf des Istwerts ein Massestrom des Produkts verwendet. Der Massestrom hängt bevorzugt ab von der von der Sensoreinheit ermittelten Dichte des Produkts. Dichteänderungen können dadurch leicht eliminiert werden, sodass sich die Genauigkeit des abgefüllten Produkts erhöht.

In einer zweckmäßigen Weiterbildung wird der Sollwertverlauf so gewählt, dass das Integral für eine bestimmte Dosierzeit dem Sollwert der zu dosierenden Masse entspricht. Damit lassen sich einerseits unterschiedliche Kurvenverläufe vorgeben, andererseits wird eine genaue Dosierung sichergestellt.

In einer zweckmäßigen Weiterbildung ist die Sensoreinrichtung zum Emittieren und/oder Empfangen von elektromagnetischen Wellen ausgebildet. Diese an sich bekannte Technologie eignet sich für das spezielle Anwendungsfeld besonders, da sie sich durch eine einfache und robuste Bauweise auszeichnet.

In einer zweckmäßigen Weiterbildung wird die Dosiereinrichtung in Abhängigkeit von einem Ausgangssignal der Sensoreinrichtung angesteuert. Besonders zweckmäßig wird die Dosiereinrichtung während des laufenden Dosiervorgangs im Sinne einer Veränderung der Sollmenge angesteuert. Durch die Nachjustierung im laufenden Dosierbetrieb wird eine fehlerhafte Befüllung minimiert.

In einer zweckmäßigen Weiterbildung ist die Dosiereinrichtung und/oder das Dosierrohr und/oder die Dosierschnecke aus einem nicht elektromagnetische Wellen abschirmenden Material, vorzugsweise Kunststoff, ausgebildet. Damit kann eine Sensoreinheit Verwendung finden, die auf elektromagnetische Wellen basiert.

In einer zweckmäßigen Weiterbildung ist die Sensoreinrichtung an einem Dosierrohr der Dosiereinrichtung, insbesondere an der Außenseite, angeordnet.

Damit kommt die Sensoreinheit nicht mit dem abzufüllenden Produkt mechanisch in Berührung, was die Störanfälligkeit reduziert.

In einer zweckmäßigen Weiterbildung ist in dem Dosierrohr zumindest eine Aussparung vorgesehen, in der die Sensoreinrichtung zumindest teilweise angeordnet ist. Damit ist die Sensoreinrichtung geschützt, aber dennoch nahe am Produkt angeordnet. Dadurch wird eine besonders kompakte Bauform ohne Beeinträchtigung der Leistung und Sensitivität des Sensors erreicht. Ferner kann der Sensor ohne großen Montageaufwand auf einfache Weise ausgetauscht werden. Besonders zweckmäßig könnte der Sensor vollständig in das Dosierrohr integriert sein. Der Sensor könnte hierbei zwischen der Außenseite des Rohrs und der Innenseite des Rohrs angeordnet sein und gegebenenfalls vollständig umschlossen sein.

In einer zweckmäßigen Weiterbildung ist vorgesehen, dass die Formeinrichtung, vorzugsweise eine Formschulter und/oder ein Formrohr, die Dosiereinrichtung zumindest teilweise umgibt. Damit kann die Sensoreinheit zwischen Formeinrichtung und Dosiereinrichtung vor Umwelteinflüssen geschützt angeordnet werden.

In einer zweckmäßigen Weiterbildung ist die Sensoreinheit so angeordnet, dass sie damit den Füllungsgrad der Dosierschnecke erfassen und damit das Produktvolumen bestimmen kann. Damit kann die Geometrie der Sensoreinheit mit Blick auf ein bekanntes Volumen der Dosiereinheit abgestimmt werden. Dies erhöht die Genauigkeit der Ermittlung des Volumens des abgefüllten Produkts.

In einer zweckmäßigen Weiterbildung ist einer Steuerung neben dem Signal der Sensoreinheit zumindest ein weiteres Signal zugeführt, vorzugsweise ein Signal des Antriebs, zur Ermittlung der charakteristischen Größe des Produkts. Die Genauigkeit der Dichte und Füllgradbestimmung kann durch die Kombination der Auswertung mithilfe einer weiteren Größe weiter verbessert werden. Damit erhöht sich die Regelgenauigkeit weiter. Die Einbeziehung weiterer Messgrößen macht den Regelprozess weniger störanfällig und damit stabiler.

Weitere zweckmäßige Weiterbildungen ergeben sich aus weiteren abhängigen Ansprüchen und der Beschreibung.

Kurze Beschreibung der Zeichnung

Nachfolgend wird ein bevorzugtes Ausführungsbeispiel der Erfindung unter Bezugnahme auf die begleitende Zeichnung im Detail beschrieben. In der Zeichnung ist:

die Figur 1     eine schematische Schnittdarstellung einer Schlauchbeutelmaschine gemäß einem bevorzugten Ausführungsbeispiel der Erfindung

die Figur 2     der zeitabhängige Verlauf des Massestroms in Form zweier Sollwertverläufe sowie des Istwerts,

die Figur 3     ein beispielhafter Verlauf eines Sprungs als Vorgabe und das zugehörige Verhalten des Reglers sowie

die Figur 4     ein Blockschaltbild einer Reglerstruktur.

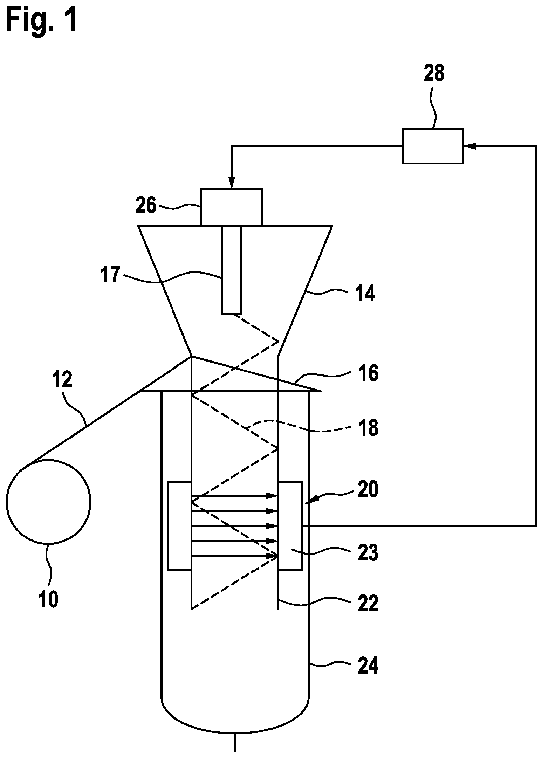

Nachfolgend wird unter Bezugnahme auf die Figur 1 eine Vorrichtung zur Abfüllung eines Produkts gemäß einem bevorzugten Ausführungsbeispiel im Detail beschrieben.

Die Figur 1 zeigt eine schematische Schnittansicht einer Vorrichtung 1 zur Abfüllung eines Produkts gemäß einem bevorzugten Ausführungsbeispiel der Erfindung. Die Vorrichtung 1 umfasst einen Trichter 14, in den ein abzufüllendes Produkt zugeführt wird. An dem Trichter 14 ist ein vorzugsweise vertikales Dosierrohr 22 befestigt. Das Dosierrohr 22 umgibt eine Dosierschnecke 19, die portionsweise das abzufüllende Produkt zuführt. Dosierrohr 22 und Dosierschnecke 19 bilden eine Dosiereinrichtung 19. Auf einer Packstoffrolle 10 ist Packstoff 12 aufgerollt. Der Packstoff 12 wird von der Packstoffrolle 10 abgerollt und einer Formeinrichtung 16, beispielsweise eine Formschulter einer Schlauchbeutelmaschine, zugeführt. Über die Formeinrichtung 16 wird der zugeführte Packstoff 12 zu einem Schlauch geformt und über eine weitere Formeinrichtung 24, beispielsweise ein Formrohr, zu einem länglichen Packstoffschlauch geformt, der durch eine hier nicht dargestellte Längssiegeleinheit mittels einer Längssiegelnaht in Längsrichtung verschweißt wird. Die Dosiereinrichtung 18 wird von der Formeinrichtung 24 umgeben. Die Vorrichtung 1, beispielsweise eine Schlauchbeutelmaschine, umfasst ferner eine nicht eigens dargestellte Quersiegeleinheit mit horizontalen ersten und zweiten Siegelbacken, die an einem dem Trichter 14 entgegengesetzten Ende des Dosierrohrs 22 angeordnet sein kann. Die Quersiegeleinheit siegelt am geformten und zyklisch zugeführten Packstoffschlauch zuerst eine Fußnaht und, nachdem eine Produktportion hineingefallen ist und der gefüllte Schlauchabschnitt weiter nach unten bewegt wurde, wird der Packstoffschlauch mittels einer Kopfnaht zu einem geschlossenen Beutel versiegelt, wobei gleichzeitig auch die Fußnaht der nachfolgenden Verpackung gesiegelt wird.

Ferner ist eine in bzw. an der Dosiereinrichtung 18 angeordnete Sensoreinrichtung 20 vorgesehen, die charakteristische Eigenschaften, insbesondere eine Masse und/oder eine Dichte und/oder ein Volumen des durch die Dosiereinrichtung 18 geförderten Produkts erfasst. Die Sensoreinrichtung 20 umfasst beispielsweise einen Sender 21 und einen Empfänger 23, die jeweils außerhalb des Dosierrohrs 22 angeordnet sind. Der Sender 21 emittiert elektromagnetische Wellen, die abhängig von den charakteristischen Eigenschaften des Produkts wie beispielsweise die Dichte, das Volumen, das Gewicht oder die Produktmenge beeinflusst bzw. verändert werden. Der an der gegenüberliegenden Seite des Dosierrohrs 22 angeordnete Empfänger 23 empfängt die elektromagnetischen Wellen. Anhand der Dämpfung der elektromagnetischen Wellen oder sonstiger charakteristischer Größen kann der Einfluss der charakteristischen Eigenschaften des Produkts auf die elektromagnetischen Wellen ermittelt werden. Die Ausgangssignale der Sensoreinrichtung 20 können einer Steuerung 28 zugeführt werden. So können zum einen eine nicht korrekt gefüllte Dosiereinrichtung 18 und/oder durch das Produkt verursachte Schwankungen der charakteristischen Eigenschaften erkannt werden. Aufgrund der Tatsache, dass das Produkt durch die Dosiereinrichtung 18 gefördert und dessen charakteristische Eigenschaften unmittelbar ermittelt werden, kann die aktuell bereits abgegebene Produktmenge während eines Produktabgabevorgangs ermittelt werden.

Die Sensoreinheit 20 hat eine Höhe h und bestimmt darin die Masse bzw. die Dichte. Beispielsweise wird die Dichte ermittelt. Da das Volumen des Abschnittes, wo der die Sensoreinheit 20 sitzt und misst, bekannt ist, kann die Menge bzw. die Produktmasse berechnet werden. Zu jedem Zeitpunkt x während einer Dosierung ist es also möglich, die bisherige Produktabgabe zu bestimmen und ggf. die Dosierschnecke 19 nach der Sollmenge zu steuern bzw. zu regeln. Durch die online ermittelte Differenz zwischen der bereits dosierten Menge und der Sollmenge kann die Dosiereinrichtung 18 online geregelt werden. Auf die dosierte Produktmenge kann über die Ermittlung des Volumens, des Gewichts oder der Produktdichte geschlossen werden. Über die Geometrie, die Kenntnis der Umdrehungen der Dosierschnecke 19 seit der Messung des Produkts und den Abstand zwischen der Sensoreinrichtung 20 und dem Ende der Dosierschnecke 19, also am Punkt der Produktabgabe, kann die zeitlich abgegebene Menge berechnet werden. Kann die Sensoreinrichtung 20 beispielsweise aus Platzgründen nicht im Formrohr 22, sondern vor oder oberhalb der Formeinrichtung 16 am Dosierrohr 22 angebracht werden, so liegt zwischen der Sensoreinrichtung 20, also dem Messpunkt, und dem Ende des Dosierrohrs 22, also der Stelle, an der das Produkt abgegeben wird, eine gewisse Förderstrecke. Da sich im Dosierrohr 22 mehrere zu dosierende Massen befinden, wird in einem Beispiel das Produkt zum Zeitpunkt t gemessen, aber erst beim Zeitpunkt $t+_T$ abgefüllt. Die Zeit $_T$ kann über bekannte Größen, wie der Abstand der Messstelle zur Produktabgabe, Drehzahl und Dosierzeit, in der sich die Dosierschnecke 19 dreht, berechnet werden.

Die Genauigkeit der Dichte/Masse und Füllgradbestimmung/Volumen kann durch eine Kombination der Auswertung verschiedener weiterer Größen verbessert werden. Im Ablauf einer Dosierung können parallel zu der Ermittlung der Dichte/Masse/Volumen auch andere physikalische Größen erfasst werden wie beispielsweise die Lastaufnahme der Antriebe 26. Durch die Kombination der Werte kann in eine Auswertende Logik (beispielsweise neuronale Netze) oder mithilfe eines Erfahrungskennfeldes die Dichte/Masse/Volumen genauer bestimmt werden und somit die Regelgenauigkeit deutlich erhöht werden. Die Einbeziehung weiterer Messgrößen macht den Regelprozess deutlich weniger störanfällig und stabiler. Beispielsweise hängt die Lastaufnahme der Antriebe unter anderem von physikalischen Eigenschaften des Produkts ab. Diese Abhängigkeiten können in einem Erfahrungskennfeld hinterlegt sein. Somit kann zu jedem Zeitpunkt über weitere Informationen z.B. der Lastaufnahme der Antriebe 26, die physikalische Größe z.B. der Dichte anhand des Kennfelds ermittelt werden. Dieser Wert kann nun z.B. zur Plausibilisierung des Sensorwertes der Sensoreinrichtung 20 verwendet werden.

Die Sensoreinrichtung 20 kann in das Dosierrohr 22 integriert sein. Alternativ kann die Sensoreinrichtung 20 auch außen am Dosierrohr 22 angebracht sein. Hierbei misst die Sensoreinrichtung 20 durch die Dosiereinrichtung 18. Je nach verwendeter Sensoreinrichtung 20 ist das Material der Dosiereinrichtung 18 und/oder des Dosierrohrs 22 geeignet zu wählen. Die Sensoreinrichtung 20 könnte auch als Rohrsensor bzw. rohrförmiger Sensor ausgebildet sein. Wird dieser dann über das Dosierrohr 22 geschoben, so muss das Dosierrohr 22 auch aus Kunststoff hergestellt sein. Wird die Sensoreinrichtung 20 in das bestehende Dosierrohr 22 integriert, dann kann das Dosierrohr 22 auch aus Metall bestehen. An den Stellen im Dosierrohr 22, an denen die Sensoreinrichtung 20 bzw. der Sender 21 und der Empfänger 23 platziert werden, wird das Material des Dosierrohrs 22 entfernt und durch die Sensoreinrichtung 20 ersetzt. Prinzipiell kann die Sensoreinrichtung 20 über die gesamte Länge der Dosiereinrichtung 18 an einer günstigen Stelle platziert werden. Grundsätzlich könnte die Sensoreinrichtung 20 auch plattenförmig ausgebildet sein.

Basiert die Sensoreinrichtung 20 auf elektromagnetischen Wellen, so eignet sich als Material für die Dosiereinrichtung 18 und/oder für das Dosierrohr 22 ein diese Wellen nicht abschirmendes Material, beispielsweise ein nicht metallisches Material wie Kunststoff. Als elektromagnetische Wellen kommen beispielsweise Wellen im Terraherz-Bereich, Röntgen- oder Mikro- bzw. Radiowellen zum Einsatz.

Außerdem ist ein Antrieb 26 vorgesehen, der die Dosiereinrichtung 18 beim Dosiervorgang bewegt. Hierzu könnte der Antrieb 26 auf eine drehbar gelagerte Halterung 17 einwirken, an der beispielsweise die Dosierschnecke 19 der Dosiereinrichtung 18 befestigt ist. Der Antrieb 26 kann durch die Steuerung 28 angesteuert werden. Die Steuerung 28 kann optional von dem Antrieb 26 charakteristische Informationen beispielsweise über die Belastung, Drehzahl, Position etc. erhalten. Mit diesen Informationen kann die Steuerung 28 die Signale der Sensoreinrichtung 20 zur Ermittlung der physikalischen Größen des dosierten Produkts weiter verbessern bzw. plausibilisieren Sinkt z.B. bei einem zu dosierenden Produkt die Belastung der Dosiereinrichtung 18, so müssen sich auch bei gleichbleibenden Parametern die physikalischen Werte der Sensoreinheit 20 verändern, das heißt die Dichte/Masse wird geringer. Die Belastung und die physikalischen Werte verhalten sich abhängig voneinander, das heißt diese korrelieren. Über solche weitere Informationen ist es möglich, die Signale der Sensoreinheit 20 zu plausibilisieren.

Die Steuerung 28 steuert die Dosiereinrichtung 18 so an, dass eine gewünschte Sollmenge des zu dosierenden Produkts in die bereitstehende Verpackung wie beispielsweise ein Packstoffschlauch abgefüllt wird. Abhängig von der aus dem Ausgangssignal der Sensoreinheit 20 ermittelten charakteristischen Größe des Produkts bestimmt die Steuerung 28, ob die so ermittelte Istmenge von der Sollmenge des abzufüllenden Produkts abweicht. Ist dies der Fall, so verändert die Steuerung 28 die Stellgrößen für die Dosiereinrichtung 18. Dies kann beispielsweise in einer Veränderung der Ansteuergrößen für den Antrieb 26 erfolgen. Diese Veränderung könnte in Form einer Regelung, beispielsweise über einfache Standard-Regler wie P, PI, PID Regler oder sonstige (robuste) Regler bzw. Regelverfahren erfolgen.

Als Dosiereinrichtung 18 kommt beispielsweise eine Dosierschnecke 19 zum Einsatz. Das zu dosierende Produkt wird über entsprechende Gewindegänge der abzufüllenden Verpackung zugeführt in der gewünschten Menge wie oben beschrieben. Die Sensoreinrichtung 20 wird benachbart zur Dosiereinrichtung 18 angeordnet zur Ermittlung charakteristischer Größen des zu dosierenden Produkts. Zudem wird die Dosiereinrichtung 18 gesteuert bzw. geregelt in Abhängigkeit von einem Ausgangssignal der Sensoreinrichtung 20. Die Dosiereinrichtung 18 kann unter anderem zum Befüllen von Beuteln einer vertikalen Schlauchbeutelmaschine verwendet werden, kann jedoch auch bei horizontalen Schlauchbeutelmaschinen eingesetzt werden. Jedoch auch das Befüllen von in einer Kette eingesetzten Beuteln ist durch die Dosiereinrichtung 18 möglich. Alternativ könnten auch vorgefertigte Beutel befüllt und die abgefüllte Menge durch die Sensoreinheit 20 ermittelt werden. Die Formeinrichtung 16,24 muss nicht notwendiger Weise Bestandteil der Vorrichtung sein. Weiterhin wesentlich ist ebenfalls, dass die Sensoreinrichtung 20 während des Dosiervorgangs die physikalischen Größen des abzufüllenden Produkts ermittelt, so dass eine entsprechende Einflussnahme auf den laufenden Dosierprozess möglich wird. Die Dosiereinrichtung 18 kann somit während des Dosiervorgangs auf die Sollmenge bzw. das Sollgewicht geregelt werden. Bei dem Produkt handelt es sich beispielsweise um einen rieselfähiges bzw. fließfähiges Produkt.

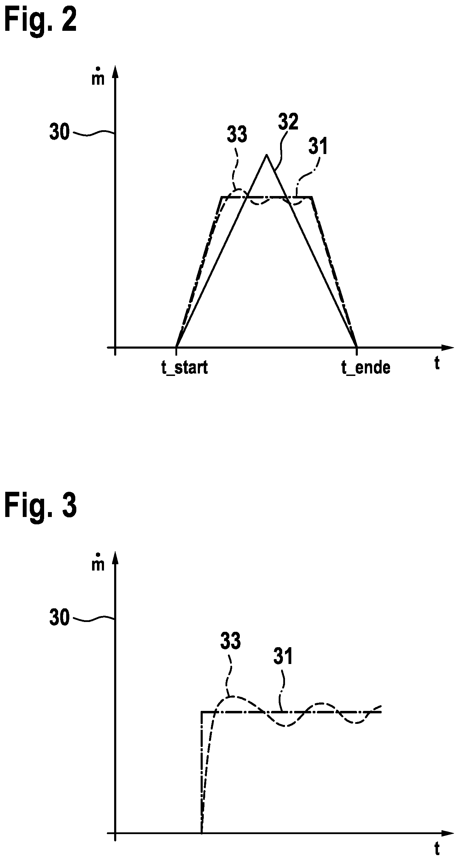

In Figur 2 sind unterschiedliche zeitliche Verläufe eines Massestroms 30 gezeigt. Ein erster Sollwertverlauf 31 eines Massestroms 30 weist beispielsweise einen trapezförmigen Verlauf auf. Zu einem Startzeitpunkt t_start steigt der Sollwertverlauf 31 mit einer bestimmten Flanke an und erreicht anschließend einen konstanten Massestrom 30, der für eine bestimmte Zeitspanne beibehalten wird, bevor der Sollwertverlauf 31 wieder mit einer bestimmten Flanke auf den Wert Null zum Zeitpunkt t_ende absinkt. Ein weiterer (alternativer) Sollwertverlauf 32 eines Massestroms 30 weist beispielsweise einen dreieckförmigen Verlauf auf. Der weitere Sollwertverlauf 32 steigt linear bis zu einem maximalen Spitzenwert des Massestroms 30 an und geht daraufhin linear wieder auf den Wert Null zum Zeitpunkt t _ende zurück. Beispielhaft ist der Verlauf des Istwerts 33 des Massestroms 30 eingezeichnet, so wie dieser anhand des Ausgangssignals der Sensoreinheit 20 ermittelt wurde und wie er sich beispielsweise bei dem in Figur 2 gezeigten ersten Sollwertverlauf 31 einstellt. Die Sollwertverläufe 31,32 werden so vorgegeben, dass das Integral des jeweiligen Sollwertverlaufs 31,32 über die Dosierzeit T (t_end - t_start) die Sollmenge m_soll vorgibt. Eine weitere Möglichkeit wäre es, die Dosierzeit T, die Schneckenumdrehungen, die Drehzahl zu ändern. Dies könnte anhand von Berechnungen erfolgen. Die abgefüllte Menge m_ist bestimmt sich gemäß Figur 2 über die Fläche der unter dem Istwert 33 liegenden Kurve bzw. als Integration des Istwerts 33. So wird der Istwert 33 schwanken und mit dem Sollwert 31 zunächst nicht zu 100 % übereinstimmen. Der Regler 36 verstärkt die Differenz zwischen Sollwert 31 und Istwert 33. Je nach Verstärkungsfaktor des Reglers 36 erreicht der Istwert 33 den Sollwert 31 schneller oder langsamer. Wesentlich jedoch ist, dass die Fläche unter den Kurven des Sollwerts 31 und des Istwerts 33 sich angleichen. Sind die Flächen unterhalb der beiden Kurven identisch, so sind auch die dosierte Masse bzw. das dosierte Gewicht identisch.

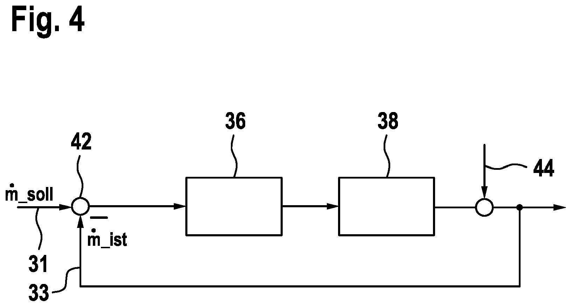

In Figur 3 ist der zeitliche Verlauf der Sprungantwort eines in Figur 4 gezeigten Reglers 36 anhand des Sollwertverlaufs 31 des Massestroms 30 und des zeitlichen Verlaufs des zugehörigen Istwerts 33 des Massestroms 30 abgebildet.

In Figur 4 ist die Reglerstruktur, die in der Steuerung 28 realisiert sein könnte, als Blockschaltbild näher gezeigt. Einem Summationspunkt 42 ist ein Sollwert 31 des Massestroms 30 zugeführt. Die Regeldifferenz, gebildet aus dem Sollwert 31 und dem ebenfalls dem Summationspunkt 42 zugeführten Istwert 33, gelangt an einen Regler 36. Das Ausgangssignal des Reglers 36 wird auf eine Regelstrecke 38 gegeben. Als Störgröße gelangen Massestromschwankungen 44 bzw. Dichteschwankungen auf das Ausgangssignal der Regelstrecke 38 in den Regelkreis. Das daraus resultierende Ausgangssignal wird als Istwert 33 wie bereits beschrieben dem Summationspunkt 42 zurückgeführt. Die Regelstrecke 38 bildet das Verhalten der Dosierung ab. Als Regler 36 kommt beispielsweise ein PI-Regler zum Einsatz. Es können jedoch auch andere geeignete Regler Verwendung finden.

Die Sensoreinheit 20 misst kontinuierlich ein Maß für die Masse bzw. der charakteristischen Eigenschaft des abzufüllenden Produkts. Dies ist im Ausführungsbeispiel die Dichte 46. Alternativ könnte die Sensoreinheit 20 auch unmittelbar die Masse des dosierten Produkts bestimmen, gegebenenfalls unter Berücksichtigung der Feuchte des dosierten Produkts. Der in jedem Abtastschritt der Sensoreinheit 20 ermittelte Wert der Dichte 46 bzw. ein daraus abgeleiteter Wert wie unten näher beschrieben wird der Steuerung 28 bzw. der gemäß Figur 4 zugrunde liegenden Reglereinheit zurückgeführt. Der Regler 36 in der Steuereinheit 28 regelt vorzugsweise den Massestrom 30 auf den gewünschten Sollwertverlauf 31, 32. Der Sollwertverlauf 31, 32 ist so definiert, dass das Integral des Sollwertverlaufs 31, 32 über die Dosierzeit genau die Sollmenge vorgibt.

Aus der Erkenntnis der bei jeder Dosierung zu jedem Zeitpunkt bereits abgegebenen Menge kann ermittelt werden, wie die Dosiereinrichtung 18 über den Regler 36 auf die Sollmenge 31,32 geregelt wird. Über Änderungen in der Dichte (Störgröße 44) ist es möglich, den Massestrom 40 über den Volumenstrom zu regeln. Hierbei wird der Volumenstrom über die kontinuierliche Anpassung der Drehzahl des Antriebs 26 beispielsweise der Dosierschnecke 19 geregelt. Die Störung der Dosierschnecke 19, also beispielsweise die Dichteänderungen der bewegten Dosiereinrichtung 18 kann eliminiert wird werden, damit nur reine Produktdichten gemessen werden. Der aktuelle Istwert 33 des Massestroms 30 kann beispielsweise ermittelt werden über die Gleichung:

$$\text{Massestrom } 30 = \text{Dichte } 46 * \text{Volumenstrom} = \text{Dichte } 46 * ds/dt * \text{Fläche } A,$$

wobei es sich bei ds/dt um zeitliche Höhenänderung handelt, also die Geschwindigkeit, mit der das Produkt mittels der Dosiereinrichtung 18 gefördert wird, die durch die Geschwindigkeit vom Antrieb 46 vorgegeben wird. Über die Drehzahl multipliziert mit der Schneckensteigung (der Dosierschnecke 19 als mögliche Dosiereinrichtung 18) ergibt sich die Geschwindigkeit, mit der die Masse transportiert wird. Wird dies mit der Fläche A (beispielsweise eine Kreisfläche) multipliziert, erhält man den Volumenstrom. Bei der Fläche A handelt es sich beispieslweise um die Querschnittsfläche des Dosierrohrs 22 der Dosiereinrichtung 18. Wird der Volumenstrom mit der Dichte 46 multipliziert, erhält man den Massestrom 30.

Der Sensor 20 ermittelt die Dichte 46 in der Dosiereinrichtung 18. Insbesondere bei einer Dosierschnecke 19 kann von einer homogenen Dichteverteilung des Produkts ausgegangen werden. Prinzipiell ist die Anordnung der Sensoreinheit 20 egal; bei einer homogenen Verteilung des Produkts lässt sich die aktuell abgegebene Menge zum jeweiligen Zeitpunkt aus der Kenntnis des Abstandes der Sensoreinheit 20 zu der Abgabestelle, der Drehzahl der Dosiereinrichtung 18 wie beispielsweise eine Dosierschnecke und Schneckensteigung berechnen. Es wird zwischen dem Zeitpunkt der Dichtemessung und der Abgabestelle die Zeitverzögerung ermittelt und in der Reglerstruktur berücksichtigt.

Über eine Bedienoberfläche kann beispielsweise die Drehzahl der Dosiereinrichtung 18, die zu dosierende Menge, die maximalen Umdrehungen und die dazu verwendete Dosierzeit T eingegeben werden. Aus den Daten wird mittels einer Berechnungsformel (beispielsweise Trapez-Formel oder Dreiecksformel wie in Figur 2 gezeigt) die Vorgabe für den entsprechenden Sollwertverlauf 31,32 bestimmt. Dies findet bei jeder einzelnen Dosierung statt. Wird ein Wert, beispielsweise die Dosierzeit T zwischen zwei Dosierungen geändert, wird bei der nächsten Dosierung der Sollwertverlauf 31, 32 verändert. Damit ist auch während der Dosierung (online) eine Planung und Veränderung des Sollwertverlaufs 31,32 möglich. Bei der Berechnungsformel mittels Trapez bestimmt der Flächeninhalt die dosierte Masse, die Breite die Dosierzeit T und die Höhe den Massestrom 30 und damit die Umdrehungen der Schnecke der Dosiereinrichtung 18.

Über die gezeigte Reglerstruktur gemäß Figur 4 wird für einen Dosiervorgang für die Dosierzeit T auf den vorgegebenen Sollwertverlauf 31,32 des Massestroms 30 geregelt, wobei während des Dosiervorgangs ständig der Istwert 33 des Massestroms 30 über das Ausgangssignal der Sensoreinheit 20 ermittelt und dem Regelkreis zur Verfügung gestellt wird. Über das Integral des Istwerts 33 des Massestroms 30 während der Dosierzeit T kann die dosierte Masse m_ist bestimmt werden. Über die Kenntnis der seit Dosierbeginn in jedem Zeitschritt berechnete oder ermittelte bereits abgegebene dosierte Menge und der Sollmenge wird in jedem Zeitpunkt die Drehzahl, die Umdrehungen und/oder die Dosierzeit der aktuellen Dosierung über den Regler 36 für den Antrieb 26 angepasst. Wie beschrieben wird der Sollwertverlauf 31,32 des Massesturms 30 vorzugsweise für jeden Dosiervorgang ermittelt. Der Dosiereinrichtung 18 kann nur eine Drehzahl vorgegeben werden. Somit wird der Sollwertverlauf 31,32, welchen der Regler 36 ausgibt, in die Soll-Drehzahl bzw. Solldrehzahlverlauf transformiert bzw. umgerechnet. Dabei wird von einer konstanten Dichte 46 ausgegangen.

So ist zum Beispiel der Massestrom 30 des zu dosierenden Produkts über die Dosierzeit T vorgegeben. Ändert sich aber die Dichte 46 (Störgröße 44) während einer Dosierung, dann werden der Volumenstrom und damit die Drehzahl beeinflusst. Dies kann beispielsweise über einen PI-oder PID-Regler oder eine Zustandsrückführung, oder einen sonstigen weiteren Regler vorgenommen werden. Als Regler 36 können P, PI, PID, Kaskaden-, Fuzzy- oder Adaptive-Regler, MPC (Model Predictive Control), flachheitsbasierte Regelverfahren oder weitere Regelverfahren wie robuste Regler, optimale Regler oder Ähnliches verwendet werden.

**Patentansprüche**

1. Vorrichtung zum Abfüllen eines Produkts, umfassend

   - zumindest eine Dosiereinrichtung (18) zur Dosierung einer bestimmten Menge des in einen Packstoffschlauch oder Beutel abzufüllenden Produkts,
   - eine Sensoreinrichtung (20) zur Erfassung charakteristischer Eigenschaften eines Produktes, nämlich einer Masse und/oder einer Dichte und/oder eines Volumens des Produktes,

   wobei die Sensoreinrichtung (20) so angeordnet ist, dass sie die charakteristischen Eigenschaften des in der Dosiereinrichtung (18) befindlichen Produkts ermittelt, wobei zumindest ein Regler (36) vorgesehen ist, der in Abhängigkeit von dem Ausgangssignal der Sensoreinrichtung (20) die Dosiereinrichtung (18) ansteuert, wobei die Dosiereinrichtung (18) während des laufenden Dosiervorgangs im Sinne einer Veränderung der Sollmenge angesteuert ist, **dadurch gekennzeichnet, dass** dem Regler (36) eine Differenz aus einem Sollwertverlauf (31,32) und einem Istverlauf (33), der abhängt von dem Ausgangssignal der Sensoreinheit (20), zugeführt ist, und dass als Sollwertverlauf (31,32) und/oder als Istverlauf (33) ein Massestrom (30) des zu dosierenden Produkts verwendet ist.

2. Vorrichtung nach Anspruch 1, **dadurch gekennzeichnet, dass** eine Steuerung (28) zur Ansteuerung der Dosiereinrichtung (18), insbesondere eines Antriebs (26), vorgesehen ist, wobei die Steuerung (28) den Regler (36) umfasst.

3. Vorrichtung nach einem der vorhergehenden Ansprüche, **dadurch gekennzeichnet, dass** eine dosierte Masse ermittelt ist in Abhängigkeit von dem Ausgangssignal der Sensoreinheit (20), insbesondere unter Verwendung einer Dichte (46) des zu dosierenden Produkts als Ausgangssignal der Sensoreinheit (20).

4. Vorrichtung nach einem der vorhergehenden Ansprüche, **dadurch gekennzeichnet, dass** der Sollwertverlauf (31,32) so gewählt ist, dass das Integral für die Dauer einer Dosierzeit (T) dem Sollwert der zu dosierenden Masse entspricht.

5. Vorrichtung nach einem der vorhergehenden Ansprüche, **dadurch gekennzeichnet, dass** die Steuerung (28) in Abhängigkeit von dem Ausgangssignal der Sensoreinheit (20) und/oder in Abhängigkeit Geschwindigkeit (ds/dt) des Dosiereinrichtung (18) und/oder in Abhängigkeit einer Fläche (A) der Dosiereinrichtung (18) den Istverlauf (33) des Massestroms (30) ermittelt.

6. Vorrichtung nach einem der vorhergehenden Ansprüche, **dadurch gekennzeichnet, dass** der Sollwertverlauf (31,32) in Abhängigkeit von der zu dosierenden Menge und/oder einer Dosierzeit (T) und/oder einer Geschwindigkeit der Dosiereinrichtung (18) gebildet ist.

7. Vorrichtung nach einem der vorhergehenden Ansprüche, **dadurch gekennzeichnet, dass** der Sollwertverlauf (31,32) einen trapezförmigen oder dreieckförmigen Verlauf aufweist.

8. Vorrichtung nach einem der vorhergehenden Ansprüche, **dadurch gekennzeichnet, dass** die Dosiereinrichtung (18) und/oder das Dosierrohr (22) und/oder die Dosierschnecke (19) aus einem nicht elektromagnetische Wellen abschirmenden Material, vorzugsweise Kunststoff, ausgebildet ist.

9. Vorrichtung nach einem der vorhergehenden Ansprüche, **dadurch gekennzeichnet, dass** die dosierte Menge unter Verwendung der charakteristischen Eigenschaft des Produkts sowie abhängig von einer Füllzeit und/oder Fördergeschwindigkeit der Dosiereinrichtung (19) und/oder geometrischen Anordnung der Sensoreinheit (20) bzw. Abstand zur Produktabgabe bestimmt ist.

10. Vorrichtung nach einem der vorhergehenden Ansprüche, **dadurch gekennzeichnet, dass** der Steuerung (28) zumindest ein weiteres Signal zugeführt ist, vorzugsweise ein Signal eines Antriebs (26) der Dosiereinrichtung (18), zur Ermittlung der charakteristischen Eigenschaft des Produkts.

**Claims**

1. Device for filling a container with a product, comprising

   - at least one dispenser unit (18) for dispensing a certain quantity of the product to be dispensed into a packing hose or bag,
   - a sensor unit (20) for recording the characteristics of a product, namely a mass and/or density and/or a volume of the product,

   whereby the sensor unit (20) is arranged such that it records the characteristics of the product contained within the dispenser unit (18), whereby at least one regulator (36) is provided that, depending on the output signal of the sensor unit (20), regulates the dispenser unit (18), whereby the dispenser unit (18) is regulated to alter the target quantity during the dispensing process, **characterised in that** the regulator (36) receives a difference from a target flow (31, 32) and an actual flow (33) depending on the output signal of the sensor unit (20), and that a mass flow (30) of the product being dispensed is used as the target flow (31, 32) and/or the actual flow (33).

2. Device according to claim 1, **characterised in that** a control unit (28) for regulating the dispenser unit (18), in particular a drive (26), is provided, whereby the control unit (28) includes the regulator (36).

3. Device according to one of the preceding claims, **characterised in that** a dispensed quantity is determined on the basis of the output signal of the sensor unit (20), in particular via use of a density (46) of the product being dispensed as the output signal of the sensor unit (20).

4. Device according to one of the preceding claims, **characterised in that** the target flow (31, 32) is selected such that the integral for the duration of a dispensing period (T) equates to the target value of the quantity to be dispensed.

5. Device according to one of the preceding claims, **characterised in that** the control unit (28) determines the actual flow (33) of the mass flow (30) based on the output signal of the sensor unit (20) and/or based on the speed (ds/dt) of the dispenser unit (18) and/or depending on an area (A) of the dispenser unit (18).

6. Device according to one of the preceding claims, **characterised in that** the target flow (31, 32) is configured based on the quantity to be dispensed and/or a dispensing time (T) and/or a speed of the dispenser unit (18) .

7. Device according to one of the preceding claims, **characterised in that** the target flow (31, 32) has a trapezoidal or triangular shape.

8. Device according to one of the preceding claims, **characterised in that** the dispenser unit (18) and/or the dispenser tube (22) and/or the dispenser coil (19) is made from a material that screens non-electromagnetic waves, preferably plastic.

9. Device according to one of the preceding claims, **characterised in that** the dispensed quantity is determined on the basis of the characteristics of the product, and depending on a till time and/or conveyance speed of the dispenser unit (19) and/or geometric arrangement of the sensor unit (20) or distance from the product output.

10. Device according to one of the preceding claims, **characterised in that** the control unit (28) receives at least one additional signal, preferably a signal from a drive (26) of the dispenser unit (18), for determining the characteristics of the product.

**Revendications**

1. Dispositif pour transvaser un produit, comprenant

   - au moins un système de dosage (18) pour le dosage d'une quantité définie du produit à transvaser dans un tube de matériau d'emballage ou sachet,
- un système de capteur (20) pour la détection de propriétés caractéristiques d'un produit, à savoir d'une masse et/ou d'une densité et/ou d'un volume du produit, dans lequel le système de capteur (20) est disposé de sorte qu'il détermine les propriétés caractéristiques du produit se trouvant dans le système de dosage (18), dans lequel au moins un régulateur (36) est prévu, qui commande le système de dosage (18) en fonction du signal de sortie du système de capteur (20), dans lequel le système de dosage (18) est commandé pendant le processus de dosage en cours au sens d'une modification de la quantité de consigne, **caractérisé en ce qu'**une différence entre une variation de valeur de consigne (31, 32) et une variation réelle (33), qui dépend du signal de sortie de l'unité capteur (20), est amenée au régulateur (36), et qu'un débit massique (30) du produit à doser est utilisé comme variation de valeur de consigne (31, 32) et/ou comme variation réelle (33).

2. Dispositif selon la revendication 1, **caractérisé en ce qu'**une commande (28) est prévue pour la commande du système de dosage (18), en particulier d'un entraînement (26), dans lequel la commande (28) comprend le régulateur (36).

3. Dispositif selon l'une quelconque des revendications précédentes, **caractérisé en ce qu'**une masse dosée est déterminée en fonction du signal de sortie de l'unité capteur (20), en particulier au moyen d'une densité (46) du produit à doser comme signal de sortie de l'unité capteur (20).

4. Dispositif selon l'une quelconque des revendications précédentes, **caractérisé en ce que** la variation de valeur de consigne (31, 32) est sélectionnée de sorte que l'intégrale pour la durée d'un temps de dosage (T) correspond à la valeur de consigne de la masse à doser.

5. Dispositif selon l'une quelconque des revendications précédentes, **caractérisé en ce que** la commande (28) détermine en fonction du signal de sortie de l'unité capteur (20) et/ou en fonction de la vitesse (ds/dt) du système de dosage (18) et/ou en fonction d'une surface (A) du système de dosage (18) la variation réelle (33) du débit massique (30).

6. Dispositif selon l'une quelconque des revendications précédentes, **caractérisé en ce que** la variation de valeur de consigne (31, 32) est formée en fonction de la quantité à doser et/ou d'un temps de dosage (T) et/ou d'une vitesse du système de dosage (18).

7. Dispositif selon l'une quelconque des revendications précédentes, **caractérisé en ce que** la variation de valeur de consigne (31, 32) présente un tracé trapézoïdal ou triangulaire.

8. Dispositif selon l'une quelconque des revendications précédentes, **caractérisé en ce que** le système de dosage (18) et/ou le tube de dosage (22) et/ou le doseur à vis (19) est réalisé à partir d'un matériau ne faisant pas écran aux ondes électromagnétiques, de préférence du plastique.

9. Dispositif selon l'une quelconque des revendications précédentes, **caractérisé en ce que** la quantité dosée est définie au moyen de la propriété caractéristique du produit ainsi qu'en fonction d'un temps de remplissage et/ou d'une vitesse de transport du système de dosage (19) et/ou d'une disposition géométrique de l'unité capteur (20) ou distance par rapport à la distribution de produit.

10. Dispositif selon l'une quelconque des revendications précédentes, **caractérisé en ce qu'**au moins un autre signal, de préférence un signal d'un entraînement (26) du système de dosage (18), est amené à la commande (28), pour la détermination de la propriété caractéristique du produit.

# Fig. 1

## Fig. 2

## Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006013663 A1
- EP 2791010 B1
- DE 10307672 A1
- DE 102011077782 A1
- DE 19743057 A1